# EUROPEAN PATENT APPLICATION

(11) **EP 2 639 671 A2**
(43) Date of publication of application: **18.09.2013**
(21) Application number: 12198232.6
(22) Date of filing: 19.12.2012
(51) Int. Cl.: G06F 1/16

(54) **Terminal, display direction correcting method for a display screen, program, and computer-readable recording medium**

(30) Priority: 15.03.2012 JP 2012059390
(71) Applicant: Omron Corporation, Kyoto-shi, Kyoto 600-8530 (JP)
(72) Inventor: Ohta, Takashi, Kyoto-shi, Kyoto 600-8530 (JP)
(74) Representative: Isarpatent

(57) **Abstract**

A display screen that is displayable in a direction corresponding to a direction of a body or face of a user. The terminal includes a gyrosensor that detects a change in direction of the terminal and activates a provided camera in order to retrieve an image of the user who is viewing the display screen. The direction of user's face or body is determined and the display direction of the display screen is set to normal or landscape mode accordingly.

## Description

### 1. TECHNICAL FIELD

The present invention relates to a terminal that can display a display screen in a direction corresponding to a direction of a user's body, a display direction correcting method for a display screen, a program, and a computer-readable recording medium.

### 2. RELATED ART

Nowadays, the need for a mobile terminal equipped with a gyrosensor is increasing with the increase in demand for touch panel type smartphone.

The mobile terminal equipped with a gyrosensor detects the mobile terminal orientation based on a gravitation direction detected by the gyrosensor, and a display direction of a display screen provided in the mobile terminal is automatically set based on the mobile terminal orientation detected by the gyrosensor.

However, the configuration generates the following inconvenience. That is, the display screen is displayed in a vertical direction corresponding to a direction on which a gravity acts based on the mobile terminal orientation detected by the gyrosensor. However, unfortunately the vertical displaying direction is not matched with a direction of a face or body of a user who views the display screen of the mobile terminal while lying down, and the displaying direction differs from the direction of the face of the user who views the display screen while lying down.

When the terminal equipped with the gyrosensor is placed on a desk, the direction of the gravity assumes the direction immediately beneath and perpendicular to the display screen, which results in a problem that the displaying direction based on the detection result of the gyrosensor is unstable.

As described below, a configuration of the terminal in which the display screen is displayed in the direction corresponding to the direction of the user's face is well known in order to solve the problems. That is, in a configuration of a mobile terminal device, positional information on a face element is detected by an image processor using a face image taken by a built-in camera, a CPU determines the vertical direction of the face information on the user with respect to the own terminal based on the positional information on the face element, the display direction of the display screen is controlled according to the vertical direction of the face information, and an image is displayed on a display unit (for example, see Japanese Unexamined Patent Publication No. 2008-177819 published in July 31, 2008).

However, in the configuration disclosed in Japanese Unexamined Patent Publication No. 2008-177819, it is necessary to always actuate the built-in camera to take the image of the user in order to display the display screen in the direction corresponding to the direction of the user's body. Therefore, the built-in camera consumes a large amount of electric power. Accordingly, from the viewpoint of the large amount of electric power consumed by the built-in camera, the configuration disclosed in Japanese Unexamined Patent Publication No. 2008-177819 lacks workability because of a risk of frequent run-out of battery.

The present invention has been devised to solve the problems described above, and an object thereof is to provide a terminal that can display the display screen in the direction corresponding to the direction of the user's body, a display direction correcting method for a display screen, a program, and a computer-readable recording medium.

### SUMMARY

In accordance with one aspect of the present invention, a terminal provided with a display screen includes: a terminal direction detector that detects a direction of the terminal; an imaging part that is provided in order to image a user who views the display screen; a user direction detector that detects a direction of the user imaged by the imaging part; and a screen display direction deciding part that decides a display direction of the display screen based on the terminal direction detected by the terminal direction detector and the user direction detected by the user direction detector.

According to the configuration of the terminal, the display direction of the display screen is decided based on the terminal direction detected by the terminal direction detector and the user direction detected by the user direction detector. Therefore, the display direction of the display screen can be decided according to the terminal direction and the user direction, and the display screen can be displayed in the direction corresponding to the direction of the user's body, such as the lying-down state.

In the terminal, preferably the screen display direction deciding part decides the display direction of the display screen based on a difference between the terminal direction detected by the terminal direction detector and the user direction detected by the user direction detector.

According to the configuration, the display screen can be displayed in the user direction in the case that the terminal direction differs from the user direction.

In the terminal, preferably the screen display direction deciding part sets the display direction of the display screen to the direction of the user when the direction of the terminal differs from the direction of the user.

According to the configuration, the display screen can be displayed in the user direction in the case that a difference between the terminal direction and the user direction is greater than a predetermined threshold.

In the terminal, preferably the imaging part images the user according to a change in terminal direction detected by the terminal direction detector.

According to the configuration, the imaging is performed when the change in terminal direction is generated, so that the display screen can be displayed in the direction corresponding to the direction of the user's body with less power consumption.

In the terminal, preferably the imaging part images the user when the change in terminal direction is greater than a predetermined threshold.

According to the configuration, the imaging is performed when the change in terminal direction is greater than a predetermined threshold, so that the display screen can be displayed in the direction corresponding to the direction of the user's body with less power consumption.

In the terminal, preferably the imaging part images the user when a determination that the display screen is oriented toward a horizontal direction is made by the terminal direction detected by the terminal direction detector.

According to the configuration, the unstable horizontal direction in which the display screen is horizontally oriented can be stabilized to the direction corresponding to the user direction.

In the terminal, preferably the user direction detector detects the user direction based on a direction of a body of the user imaged by the imaging part.

According to the configuration, the display screen can be displayed based on the direction of the user's body.

In the terminal, preferably the user direction detector detects the user direction based on a direction of a face of the user imaged by the imaging part.

According to the configuration, the display screen can be displayed based on the direction of the user's face.

In the terminal, preferably the terminal direction detector includes a gyrosensor that detects the terminal direction based on a gravitation direction.

According to the configuration, the terminal direction can be detected by the simple structure.

In the terminal, preferably the terminal direction detector includes a GPS directional sensor that detects the terminal direction based on a direction of a GPS satellite and a direction of a directional sensor.

According to the configuration, the terminal direction can be detected based on the global positioning system.

In the terminal, preferably the terminal direction detector includes a wireless sensor that detects the terminal direction based on a direction of a transmitter.

According to the configuration, the terminal direction can be detected from an angle between the wireless sensor used in WiFi (Wireless Fidelity) and the transmitter.

In accordance with another aspect of the present invention, a display direction correcting method for a display screen includes the steps of: detecting a direction of a terminal provided with a display screen; imaging a user who views the display screen; detecting a direction of the user imaged in the imaging step; and deciding a display direction of the display screen based on the terminal direction detected in the terminal direction detecting step and the user direction detected in the user direction detecting step.

In accordance with still another aspect of the present invention, a program causes a computer to perform the steps of: detecting a direction of a terminal provided with a display screen; imaging a user who views the display screen; detecting a direction of the user imaged in the imaging step; and deciding a display direction of the display screen based on the terminal direction detected in the terminal direction detecting step and the user direction detected in the user direction detecting step.

In accordance with yet another aspect of the present invention, a computer-readable recording medium in which a program is recorded, wherein the program causes a computer to perform the steps of: detecting a direction of a terminal provided with a display screen; imaging a user who views the display screen; detecting a direction of the user imaged in the imaging step; and deciding a display direction of the display screen based on the terminal direction detected in the terminal direction detecting step and the user direction detected in the user direction detecting step.

In the terminal of the present invention, the display direction of the display screen is decided based on the terminal direction detected by the terminal direction detector and the user direction detected by the user direction detector. Therefore, the display direction of the display screen can be decided according to the terminal direction and the user direction, and the display screen can be displayed in the direction corresponding to the direction of the user's body, such as the lying-down state.

### BRIEF DESCRIPTION OF THE DRAWINGS

FIG. 1 is a perspective view illustrating an appearance of a terminal according to a first embodiment;
FIG. 2 is a block diagram illustrating a configuration of the terminal of the first embodiment;
FIG. 3 is a view illustrating a method for detecting a direction of the terminal with a gyrosensor provided in the terminal;
FIGS. 4A and 4B are views illustrating a method for detecting a change in direction of the terminal with the gyrosensor;
FIG. 5A is a view illustrating a terminal direction detected by the gyrosensor, and FIG. 5B is a view illustrating a direction of a user's face imaged by a camera provided in the terminal;
FIG. 6 is a flowchart illustrating an operation of the terminal of the first embodiment;
FIG. 7 is a block diagram illustrating a configuration of a terminal according to a modification of the first embodiment;
FIG. 8 is a flowchart illustrating an operation of the terminal of the modification;
FIG. 9 is a view illustrating a method for detecting a direction of a terminal according to a second embodiment with a GPS directional sensor provided in the terminal;
FIG. 10 is a block diagram illustrating a configuration of the terminal of the second embodiment;
FIG. 11 is a flowchart illustrating an operation of the terminal of the second embodiment;
FIG. 12 is a block diagram illustrating a configuration of a terminal according to a modification of the second embodiment;
FIG. 13 is a flowchart illustrating an operation of the terminal of the modification;
FIG. 14 is a view illustrating a method for detecting a direction of a terminal according to a third embodiment with a wireless sensor provided in the terminal;
FIG. 15 is a block diagram illustrating a configuration of the terminal of the third embodiment;
FIG. 16 is a flowchart illustrating an operation of the terminal of the third embodiment;
FIG. 17 is a block diagram illustrating a configuration of a terminal according to a modification of the third embodiment;
FIG. 18 is a flowchart illustrating an operation of the terminal of the modification;
FIG. 19 is a block diagram illustrating a configuration of a terminal according to a fourth embodiment; and
FIG. 20 is a flowchart illustrating an operation of the terminal of the fourth embodiment.

### DETAILED DESCRIPTION

### (Outline)

Hereinafter, terminals according to embodiments of the invention will be described with reference to the drawings. In a terminal according to a first embodiment, a user is imaged when a change in direction of the terminal detected by a gyrosensor is greater than a predetermined threshold, and a display direction of a display screen is decided based on the direction of a user's body imaged according to the change in terminal direction.

A terminal according to a second embodiment differs from the terminal of the first embodiment in that the change in terminal direction is detected by a GPS directional sensor. A terminal according to a third embodiment differs from the terminal of the first embodiment in that the change in terminal direction is detected by a wireless sensor.

In a terminal according to a fourth embodiment, a displaying direction of a display screen is set based on the direction of the terminal detected by the gyrosensor, the user is imaged when a determination that the display screen is horizontally oriented is made by the direction of the terminal detected by the gyrosensor, and the display direction of the display screen is decided based on the direction of the user's body imaged by a camera when the determination that the display screen is horizontally oriented is made.

### (First Embodiment)

### (Configuration of Terminal)

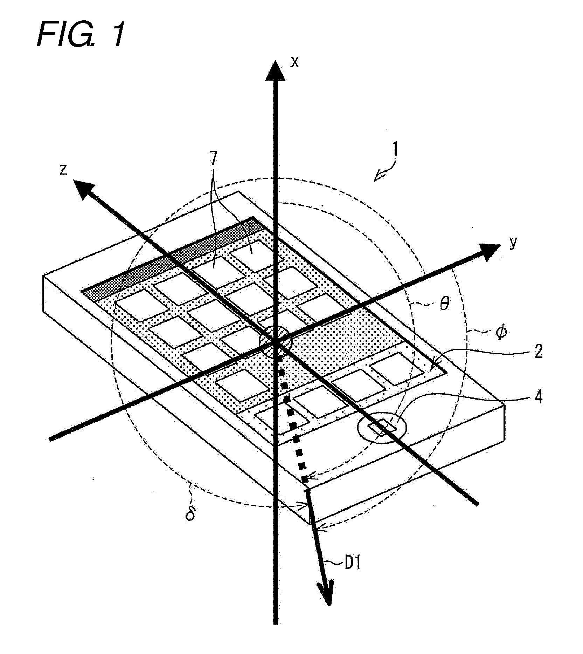

FIG. 1 is a perspective view illustrating an appearance of a terminal 1 according to a first embodiment. For example, the terminal 1 is a touch panel type smartphone provided with a plate-like chassis. The terminal 1 includes a display screen 2 on a surface of the chassis. A plurality of icons 7 is displayed on the display screen 2 in order to manipulate the terminal 1. A camera 4 that can image the user of the terminal 1 is provided near the display screen 2.

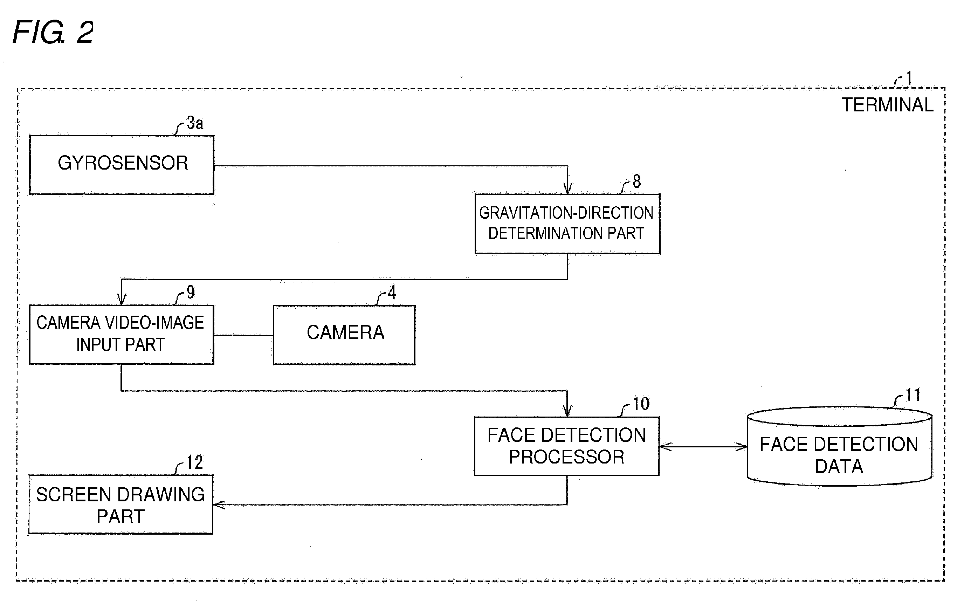

FIG. 2 is a block diagram illustrating a configuration of the terminal 1. The terminal 1 includes a gyrosensor 3a that detects the detection of the terminal 1 based on a gravitation direction. The terminal 1 includes a gravitation-direction determination part 8. The gravitation-direction determination part 8 determines the direction of the display screen 2 of the terminal 1 based on the gravitation direction detected by the gyrosensor 3a.

Referring to FIG. 1, the direction of the terminal 1 is defined by a pitch angle θ, a yaw angle φ, and a roll angle δ. When an x-axis, a y-axis, and a z-axis, which are orthogonal to one another, are defined as illustrated in FIG. 1, the pitch angle θ is a rotation angle about the y-axis in a direction D1, the yaw angle φ is a rotation angle about the x-axis in the direction D1, and the roll angle δ is a rotation angle about the z-axis in the direction D1.

Referring to FIG. 2, the terminal 1 includes a camera video-image input part 9. Image data of the user imaged by the camera 4 is input to the camera video-image input part 9 from the camera 4, and the camera video-image input part 9 supplies the image data to a face detection processor 10.

The face detection processor 10 detects the direction of a user's face with respect to the display screen 2 of the terminal 1 based on the user's image data supplied from the camera video-image input part 9 and face detection data stored in a face detection database 11.

The terminal 1 includes a screen displaying part 12. The screen displaying part 12 displays the display screen 2 in the displaying direction corresponding to the direction of the display screen 2 of the terminal 1, which is determined by the gravitation-direction determination part 8. The screen displaying part 12 compares the direction of the display screen 2 of the terminal 1, which is determined by the gravitation-direction determination part 8, to the direction of the user's face with respect to the display screen 2, which is detected by the face detection processor 10. Unless the direction of the display screen 2 of the terminal 1 agrees with the direction of the user's face with respect to the display screen 2, the displaying direction of the display screen 2 is corrected to the direction of the user's face. When the direction of the display screen 2 of the terminal 1 agrees with the direction of the user's face with respect to the display screen 2, the displaying is carried out in the displaying direction corresponding to the direction of the display screen 2, which is determined by the gravitation-direction determination part 8.

### (Operation of Gyrosensor)

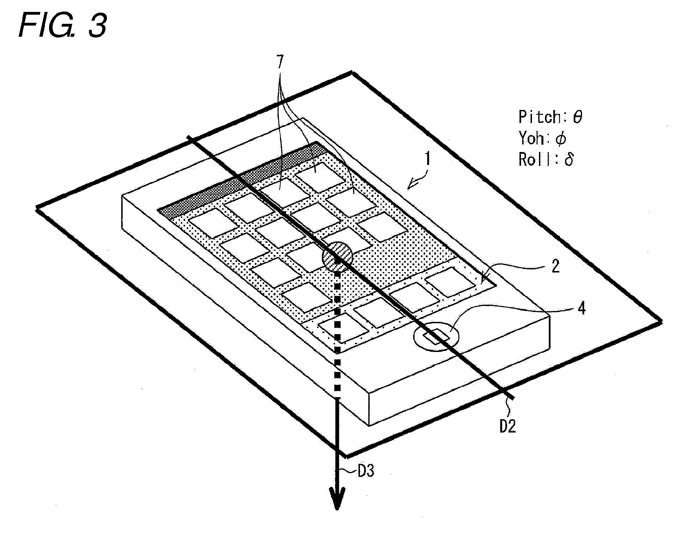

FIG. 3 is a view illustrating a method for detecting a direction D2 of the terminal 1 with the gyrosensor 3a (see FIG. 2) provided in the terminal 1. Using the pitch angle θ, the yaw angle φ, and the roll angle δ, the gravitation-direction determination part 8 (see FIG. 2) determines the direction D2 of the display screen 2 of the terminal 1 based on a gravitation direction D3 detected by the gyrosensor 3a (see FIG. 2).

### (Detection of Change in Direction of Terminal)

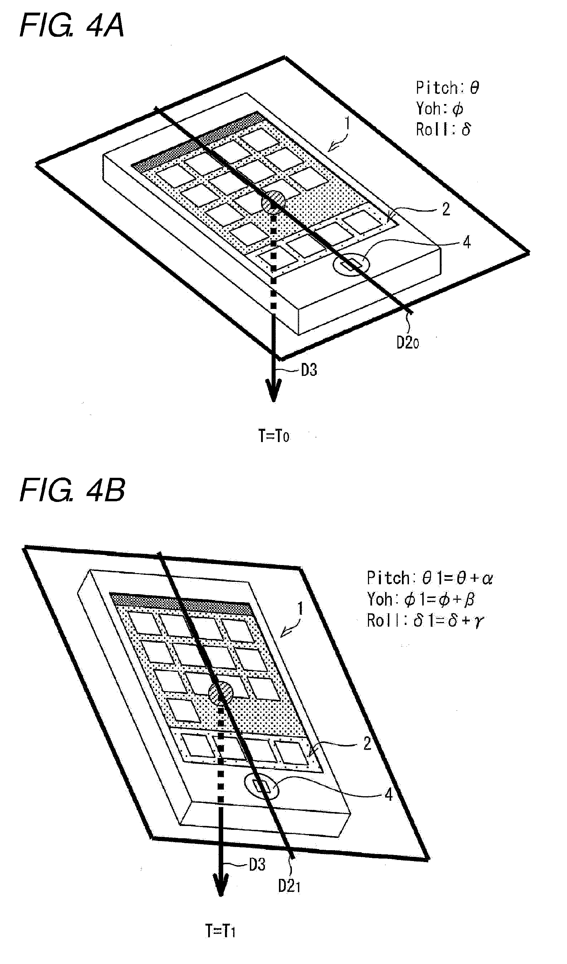

FIGS. 4A and 4B are views illustrating a method for detecting a change in direction of the terminal 1 with the gyrosensor 3a. At a clock time T = To, based on the gravitation direction D3 detected by the gyrosensor 3a, a terminal direction D2₀ is detected by the pitch angle θ, the yaw angle φ, and the roll angle δ. At a clock time T = T₁ (T₀ < T₁), based on the gravitation direction D3, a terminal direction D2₁ is detected by a pitch angle θ₁ = θ + α, a yaw angle φ₁ = φ + β, and a roll angle δ₁ = δ + γ.

When an absolute value of α is greater than a threshold Th1.a of the pitch angle, when an absolute value of β is greater than a threshold of the yaw angle, or when an absolute value of γ is greater than a threshold Th3.c of the roll angle, a determination that the change in terminal direction is greater than a predetermined threshold is made, and the camera 4 is started up to image the user.

### (Display Direction Correcting Method)

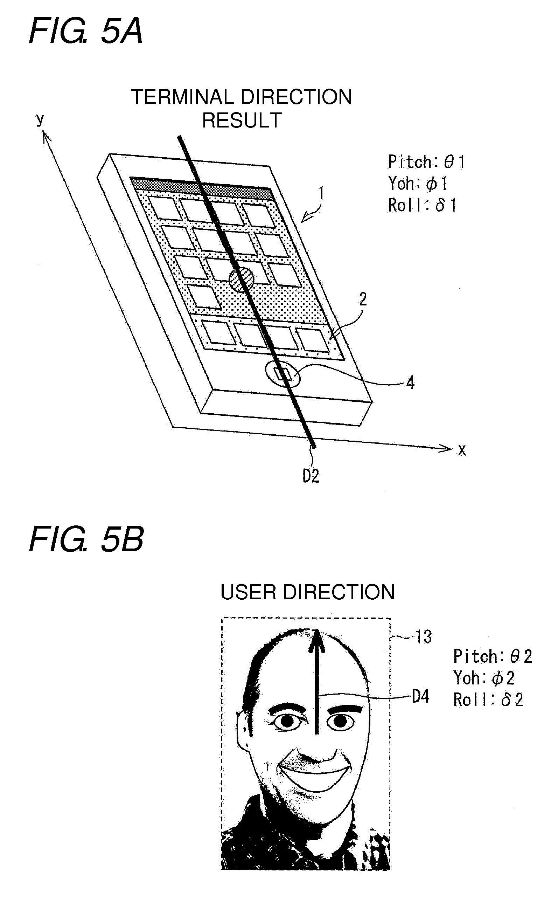

FIG. 5A is a view illustrating the direction of the terminal 1, which is detected by the gyrosensor 3a, and FIG. 5B is a view illustrating the direction of a user's face imaged by the camera 4 provided in the terminal 1.

It is assumed that the direction D2 of the terminal 1, which is detected by the gyrosensor 3a, is expressed by a pitch angle θ1, a yaw angle φ1, and a roll angle δ1. It is assumed that a direction D4 of the face of the user who views the display screen 2 of the terminal 1 is expressed by a pitch angle θ2, a yaw angle φ2, and a roll angle δ2 in a user image 13. There is no particular limitation to a method for determining the direction D4 of the user's face. For example, the direction D4 of the user's face can be determined by the image of the user who views the display screen 2, which is imaged by the camera 4 provided in the terminal 1.

When (θ1 - θ2) is greater than a pitch angle threshold Th1.aa, when (φ1 - φ2) is greater than a yaw angle threshold Th2.bb, or when (δ1 - δ2) is greater than a roll angle threshold Th3.cc, the screen displaying part 12 corrects the displaying direction of the display screen 2 based on the direction D4 of the user's face.

In other cases, the displaying is carried out in the displaying direction based on the direction of the terminal 1, which is detected by the gyrosensor 3a.

### (Operation of Terminal 1)

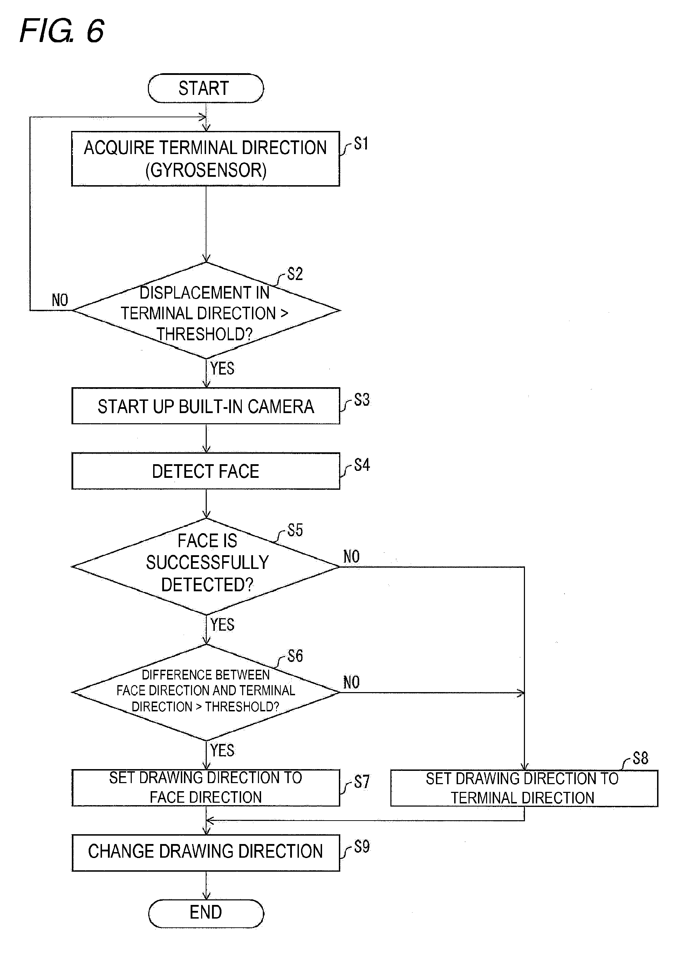

FIG. 6 is a flowchart illustrating an operation of the terminal 1. The gravitation direction D3 is detected by the gyrosensor 3a, and the direction D2₁ (see FIG. 4B) of the display screen 2 of the terminal 1 is detected based on the detected gravitation direction D3 using the pitch angle θ + α, the yaw angle φ + β, and the roll angle δ + γ (Step S1). Whether the absolute value of α is greater than the threshold Th1.a of the pitch angle, whether the absolute value of β is greater than the threshold Th2.b of the yaw angle, or whether the absolute value of γ is greater than the threshold Th3.c of the roll angle is determined with respect to the pitch angle θ, the yaw angle φ, and the roll angle δ, which are the previous detection values (Step S2). When the absolute value of α is less than or equal to the threshold Th1.a of the pitch angle, when the absolute value of β is less than or equal to the threshold Th2.b of the yaw angle, or when the absolute value of γ is less than or equal to the threshold Th3.c of the roll angle (NO in Step S2), the flow returns to Step S1.

When the absolute value of α is greater than the threshold Th1.a of the pitch angle, when the absolute value of β is greater than the threshold Th2.b of the yaw angle, or when the absolute value of γ is greater than the threshold Th3.c of the roll angle (YES in Step S2), the camera 4 is started up (Step S3), and the user who views the display screen 2 of the terminal 1 is imaged (Step S4). The face detection processor 10 determines whether the face of the user who views the display screen 2 of the terminal 1 is taken in the image imaged by the camera 4 (Step S5).

When the face of the user who views the display screen 2 of the terminal 1 is taken in the image imaged by the camera 4 (YES in Step S5), the face detection processor 10 determines the direction of the face of the user taken in the image imaged by the camera 4. The screen displaying part 12 compares the direction D4 of the user's face determined by the face detection processor 10 with respect to the display screen 2 to the direction D2 of the display screen 2 of the terminal 1, which is detected by the gyrosensor 3a (Step S6).

As described above, it is assumed that the direction D2 of the display screen 2 of the terminal 1, which is detected by the gyrosensor 3a, is expressed by the pitch angle θ1, the yaw angle φ1, and the roll angle δ1. It is assumed that the direction D4 of the user who views the display screen 2 of the terminal 1 is expressed by the pitch angle θ2, the yaw angle φ2, and the roll angle δ2. When (θ1 - θ2) is greater than the pitch angle threshold Th1.aa, when (φ1 - φ2) is greater than the yaw angle threshold Th2.bb, or when (δ1 - δ2) is greater than the roll angle threshold Th3.cc (YES in Step S6), the screen displaying part 12 corrects the displaying direction of the display screen 2 based on the direction D4 of the user's face with respect to the display screen 2 (Step S7).

When the user who views the display screen 2 of the terminal 1 is not taken in the image imaged by the camera 4 (NO in Step S5) or when (θ1 - θ2) is less than or equal to the pitch angle threshold Th1.aa, when (φ1 - φ2) is less than or equal to the yaw angle threshold Th2.bb, or when (δ1 - δ2) is less than or equal to the roll angle threshold Th3.cc (NO in Step S6), the screen displaying part 12 sets the displaying direction to the direction D2 of the terminal 1, which is detected by the gyrosensor 3a (Step S8).

When the displaying direction of the display screen 2 is corrected based on the direction D4 of the user's face (Step S7), or when the displaying direction is set to the direction D2 of the terminal 1, which is detected by the gyrosensor 3a (Step S8), the displaying direction of the display screen 2 of the terminal 1 is changed according to the setting result (Step S9). Then the processing is ended.

### (Configuration of Modification)

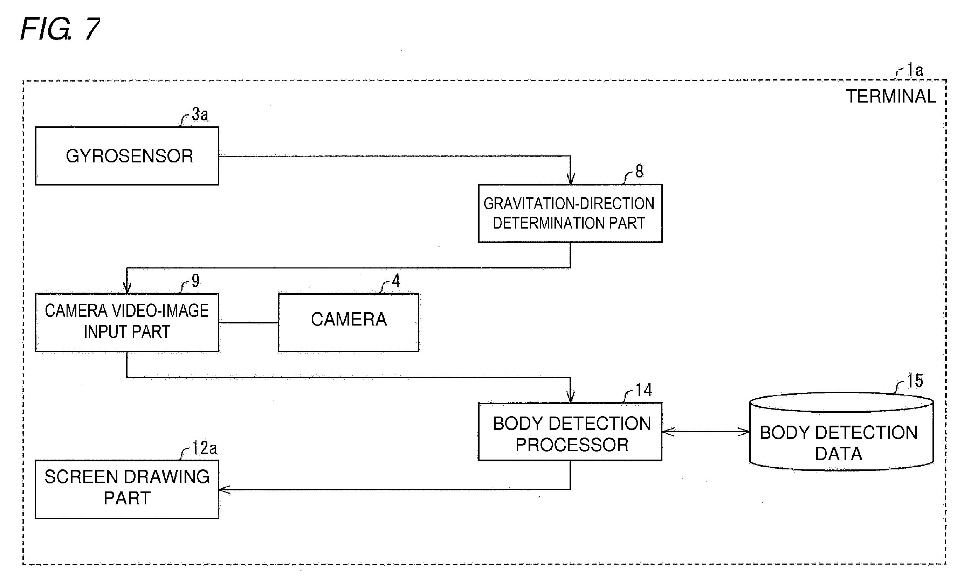

FIG. 7 is a block diagram illustrating a configuration of a terminal according to a modification of the first embodiment. The same structural element as the above structural element is designated by the same reference numeral. The repetitive description of the same structural element is omitted.

A terminal 1a differs from the terminal 1 in that the terminal 1a includes a body detection processor 14, a body detection database 15, and a screen displaying part 12a. The body detection processor 14 detects the direction of the user's body with respect to the display screen 2 of the terminal 1a based on the image data of the user, which is supplied from the camera video-image input part 9, and body detection data stored in the body detection database 15.

A body detection sensor may be provided instead of the camera 4, or any part may be provided as long as it can detect the direction of the viewer who views the display screen 2 or the vertical direction of the body.

### (Operation of Modification)

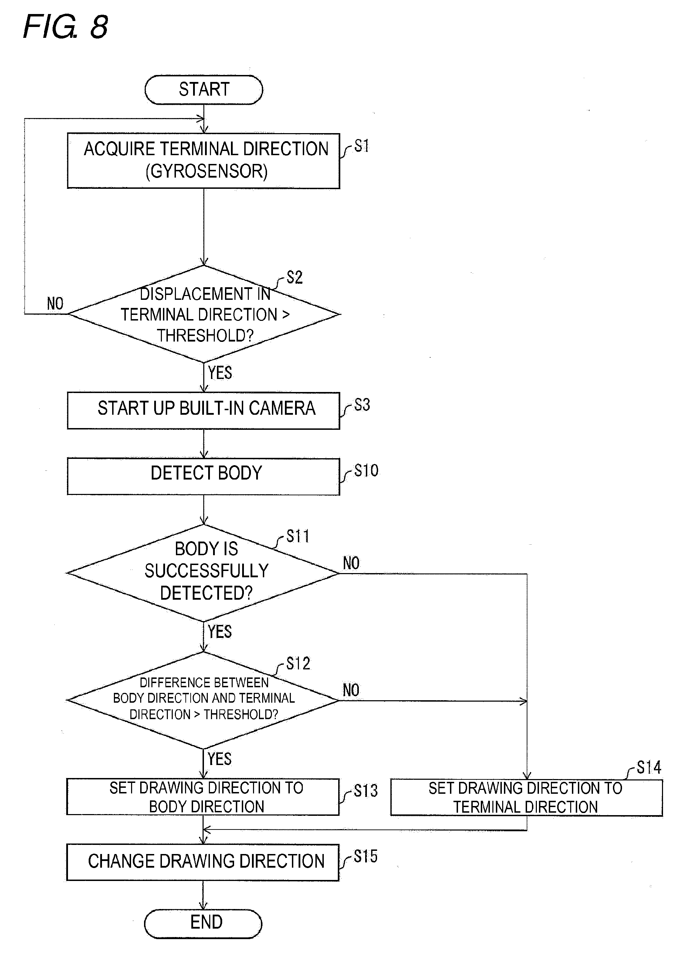

FIG. 8 is a flowchart illustrating an operation of the terminal of the modification. The same structural element as the above structural element is designated by the same reference numeral. The repetitive description of the same structural element is omitted.

The gravitation direction D3 is detected by the gyrosensor 3a, and the direction D2₁ (see FIG. 4B) of the display screen 2 of the terminal 1a is detected based on the detected gravitation direction D3 using the pitch angle θ + α, the yaw angle φ + β, and the roll angle δ + γ (Step S1). Whether the absolute value of α is greater than the threshold Th1.a of the pitch angle, whether the absolute value of β is greater than the threshold Th2.b of the yaw angle, or whether the absolute value of γ is greater than the threshold Th3.c of the roll angle is determined with respect to the pitch angle θ, the yaw angle φ, and the roll angle δ, which are the previous detection values (Step S2). When the absolute value of α is less than or equal to the threshold Th1.a of the pitch angle, when the absolute value of β is less than or equal to the threshold Th2.b of the yaw angle, or when the absolute value of γ is less than or equal to the threshold Th3.c of the roll angle (NO in Step S2), the flow returns to Step S1.

When the absolute value of α is greater than the threshold Th1.a of the pitch angle, when the absolute value of β is greater than the threshold Th2.b of the yaw angle, or when the absolute value of γ is greater than the threshold Th3.c of the roll angle (YES in Step S2), the camera 4 is started up (Step S3), and the body of the user who views the display screen 2 of the terminal 1a is imaged (Step S10). The body detection processor 14 determines whether the body of the user who views the display screen 2 of the terminal 1a is taken in the image imaged by the camera 4 (Step S11).

When the body of the user who views the display screen 2 of the terminal 1a is taken in the image imaged by the camera 4 (YES in Step S11), the body detection processor 14 determines the direction of the body of the user taken in the image imaged by the camera 4. The screen displaying part 12a compares the direction of the user's body determined by the body detection processor 14 with respect to the display screen 2 to the direction of the display screen 2 of the terminal 1a, which is detected by the gyrosensor 3a (Step S12).

When a difference between the direction of the user's body with respect to the display screen 2 and the direction of the display screen 2 of the terminal 1a is greater than a predetermined threshold (YES in Step S12), the screen displaying part 12a corrects the displaying direction of the display screen 2 based on the direction of the user's body with respect to the display screen 2 (Step S13).

When the body of the user who views the display screen 2 of the terminal 1a is not taken in the image imaged by the camera 4 (NO in Step S11), or when the difference between the direction of the user's body with respect to the display screen 2 and the direction of the display screen 2 of the terminal 1a is less than or equal to the threshold (NO in Step S12), the screen displaying part 12a sets the displaying direction to the direction of the terminal 1a, which is detected by the gyrosensor 3a (Step S14).

When the displaying direction of the display screen 2 is corrected based on the direction of the user's body (Step S13), or when the displaying direction is set to the direction of the terminal 1a, which is detected by the gyrosensor 3a (Step S14), the displaying direction of the display screen 2 of the terminal 1a is changed according to the setting result (Step S15). Then the processing is ended.

### (Another Determination Method Using Threshold)

By way of example, the threshold is determined based on whether the absolute value of α is greater than the threshold Th1.a of the pitch angle, whether the absolute value of β is greater than the threshold Th2.b of the yaw angle, or whether the absolute value of γ is greater than the threshold Th3.c of the roll angle is determined with respect to the pitch angle θ, the yaw angle φ, and the roll angle δ. However, the present invention is not limited to the above method for determining the threshold. The threshold may be determined based only on the pitch angle θ and the yaw angle φ or only on the roll angle δ. The same holds true for the following embodiments.

### (Application Range of The Invention)

The present invention is applied to the smartphone by way of example. However, the present invention is not limited to this. The present invention can also be applied to mobile terminals including a mobile phone and tablet type terminals. The same holds true for the following embodiments.

### (Effect of First Embodiment)

According to the first embodiment, the camera images the user only when necessary according to the direction of the terminal, which is detected by the gyrosensor. Therefore, the display screen can be displayed in the direction corresponding to the direction of the user's body with less power consumption. Accordingly, even if the user places the mobile terminal on the desk while lying down, or even if the user tilts the screen of the mobile terminal while lying down, the display screen can be displayed automatically in the displaying direction with less power consumption.

### (Second Embodiment)

### (Configuration of Terminals 1b and 1c)

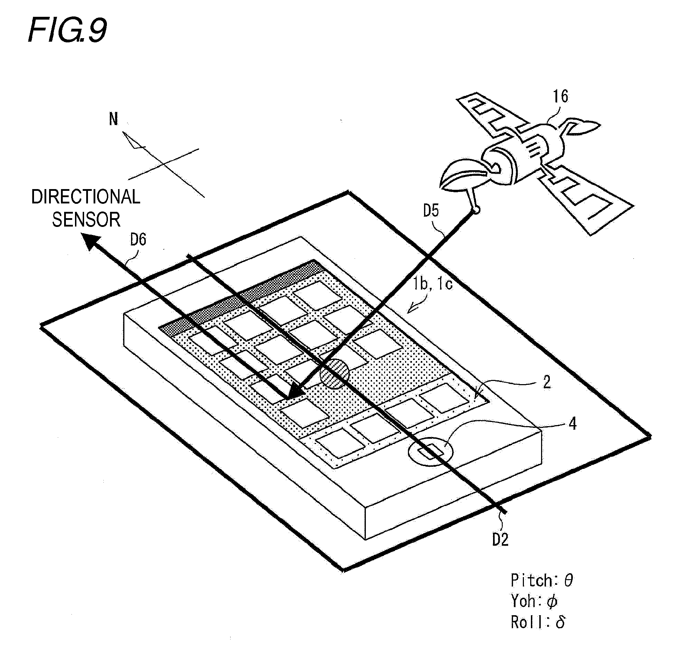

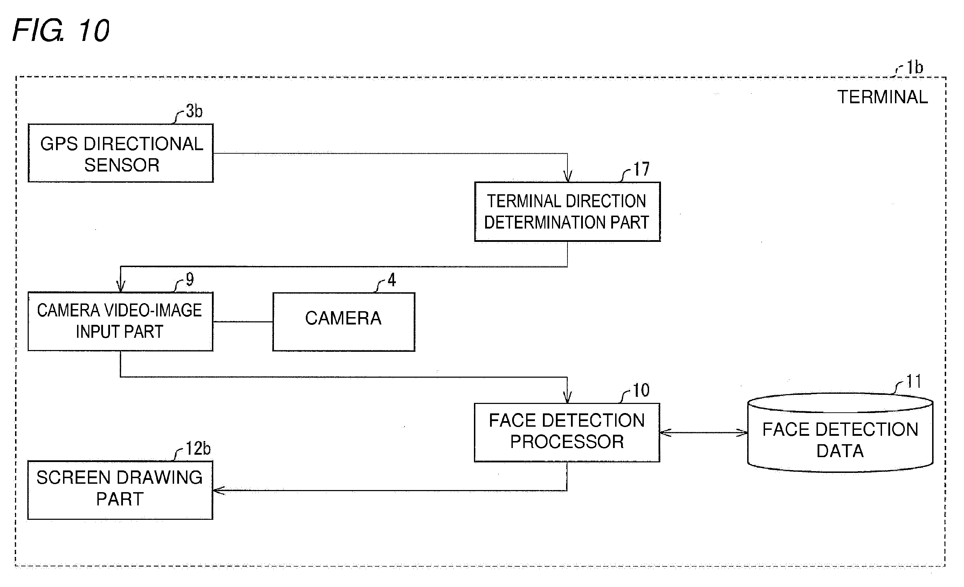

FIG. 9 is a view illustrating a method for detecting the directions D2 of terminals 1b and 1c according to a second embodiment with GPS directional sensors 3b (see FIG. 10) provided in the terminals 1b and 1c. FIG. 10 is a block diagram illustrating a configuration of the terminal 1b. The same structural element as the above structural element is designated by the same reference numeral. The repetitive description of the same structural element is omitted.

A terminal 1b differs from the terminal 1 in FIG. 2 in that the terminal 1b includes a GPS directional sensor 3b and a terminal direction determination part 17. The GPS directional sensor 3b detects a direction D5 of a GPS satellite 16 and a direction D6 of a directional sensor indicating north and south, and supplies the direction D5 and the direction D6 to the terminal direction determination part 17. The terminal direction determination part 17 determines the direction D2 of terminals 1b and 1c based on the direction D5 of the GPS satellite 16 and the direction D6 of the directional sensor indicating the north and south, which are supplied from the GPS directional sensor 3b.

### (Operation of Terminal 1b)

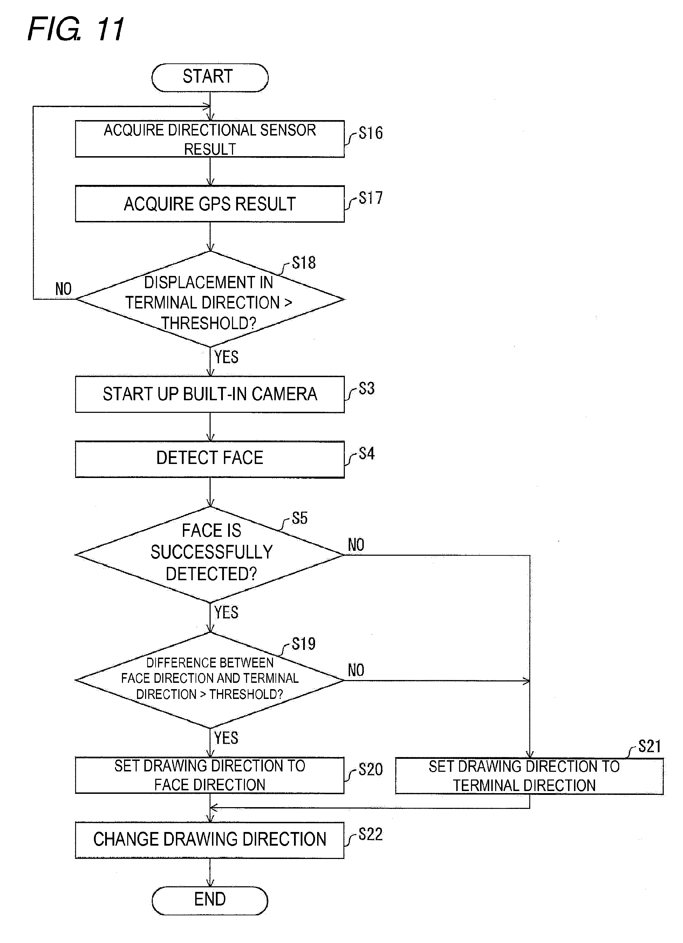

FIG. 11 is a flowchart illustrating an operation of the terminal 1b. The north-south direction D6 is detected by the directional sensor indicating the north and south (Step S16). A GPS directional sensor 3b (see FIG. 10) detects the direction D5 of the GPS satellite 16 (Step S17). The direction D2 of the display screen 2 of the terminal 1b is detected by the pitch angle θ + α, the yaw angle φ + β, and the roll angle δ + γ based on the north-south direction D6 and the direction D5 of the GPS satellite 16.

Whether the absolute value of α is greater than the threshold Th1.a of the pitch angle, whether the absolute value of β is greater than the threshold Th2.b of the yaw angle, or whether the absolute value of γ is greater than the threshold Th3.c of the roll angle is determined with respect to the pitch angle θ, the yaw angle φ, and the roll angle δ, which are the previous detection values (Step S18). When the absolute value of α is less than or equal to the threshold Th1.a of the pitch angle, when the absolute value of β is less than or equal to the threshold Th2.b of the yaw angle, or when the absolute value of γ is less than or equal to the threshold Th3.c of the roll angle (NO in Step S18), the flow returns to Step S16.

When the absolute value of α is greater than the threshold Th1.a of the pitch angle, when the absolute value of β is greater than the threshold Th2.b of the yaw angle, or when the absolute value of γ is greater than the threshold Th3.c of the roll angle (YES in Step S18), the camera 4 is started up (Step S3), and the user who views the display screen 2 of the terminal 1b is imaged (Step S4). The face detection processor 10 determines whether the face of the user who views the display screen 2 of the terminal 1b is taken in the image imaged by the camera 4 (Step S5).

When the face of the user who views the display screen 2 of the terminal 1b is taken in the image imaged by the camera 4 (YES in Step S5), the face detection processor 10 determines the direction of the face of the user taken in the image imaged by the camera 4. The screen displaying part 12b compares the direction D4 (see FIG. 5) of the user's face determined by the face detection processor 10 with respect to the display screen 2 to the direction D2 of the display screen 2 of the terminal 1b, which is detected by the GPS directional sensor 3b (Step S19).

For example, it is assumed that the direction D2 of the display screen 2 of the terminal 1b, which is detected by the GPS directional sensor 3b, is expressed by the pitch angle θ1, the yaw angle φ1, and the roll angle δ1. It is assumed that the direction D4 of the face of the user who views the display screen 2 of the terminal 1b is expressed by the pitch angle θ2, the yaw angle φ2, and the roll angle δ2. When (θ1 - θ2) is greater than the pitch angle threshold Th1.aa, when (φ1 - φ2) is greater than the yaw angle threshold Th2.bb, or when (δ1 - δ2) is greater than the roll angle threshold Th3.cc (YES in Step S19), the screen displaying part 12b corrects the displaying direction of the display screen 2 based on the direction D4 of the user's face with respect to the display screen 2 (Step S20).

When the face of the user who views the display screen 2 of the terminal 1b is not taken in the image imaged by the camera 4 (NO in Step S5) or when (θ1 - θ2) is less than or equal to the pitch angle threshold Th1.aa, when (φ1 - φ2) is less than or equal to the yaw angle threshold Th2.bb, or when (δ1 - δ2) is less than or equal to the roll angle threshold Th3.cc (NO in Step S19), the screen displaying part 12b sets the displaying direction to the direction D2 of the terminal 1b, which is detected by the GPS directional sensor 3b (Step S21).

When the displaying direction of the display screen 2 is corrected based on the direction D4 of the user's face (Step S20), or when the displaying direction is set to the direction D2 of the terminal 1b, which is detected by the GPS directional sensor 3b (Step S21), the displaying direction of the display screen 2 of the terminal 1b is changed according to the setting result (Step S22). Then the processing is ended.

### (Configuration of Modification)

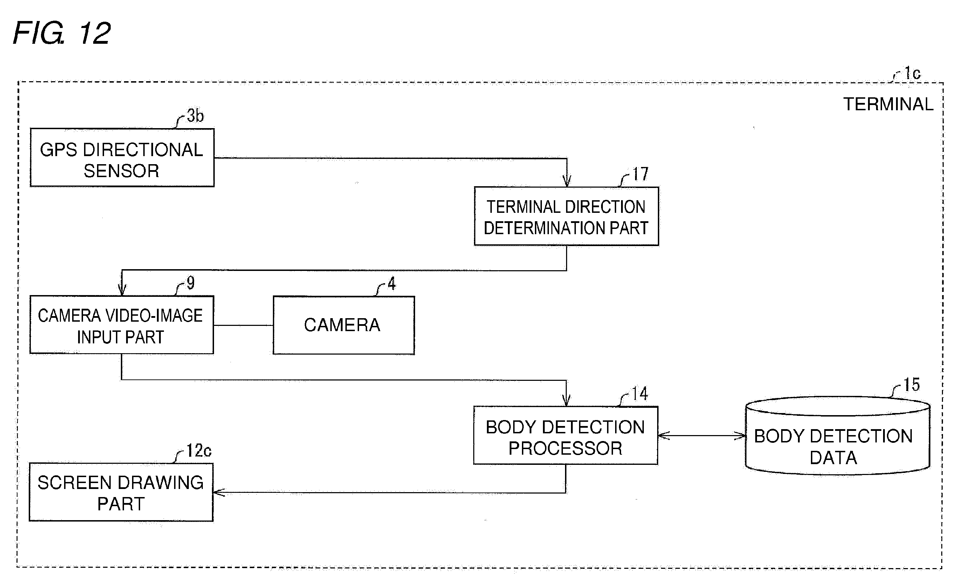

FIG. 12 is a block diagram illustrating a configuration of a terminal according to a modification of the second embodiment. The same structural element as the above structural element is designated by the same reference numeral. The repetitive description of the same structural element is omitted.

The terminal 1c differs from the terminal 1b in FIG. 10 in that the terminal 1c includes the body detection processor 14, the body detection database 15, and a screen displaying part 12c. The body detection processor 14 detects the direction of the user's body with respect to the display screen 2 of the terminal 1c based on the image data of the user, which is supplied from the camera video-image input part 9, and the body detection data stored in the body detection database 15.

### (Operation of Modification)

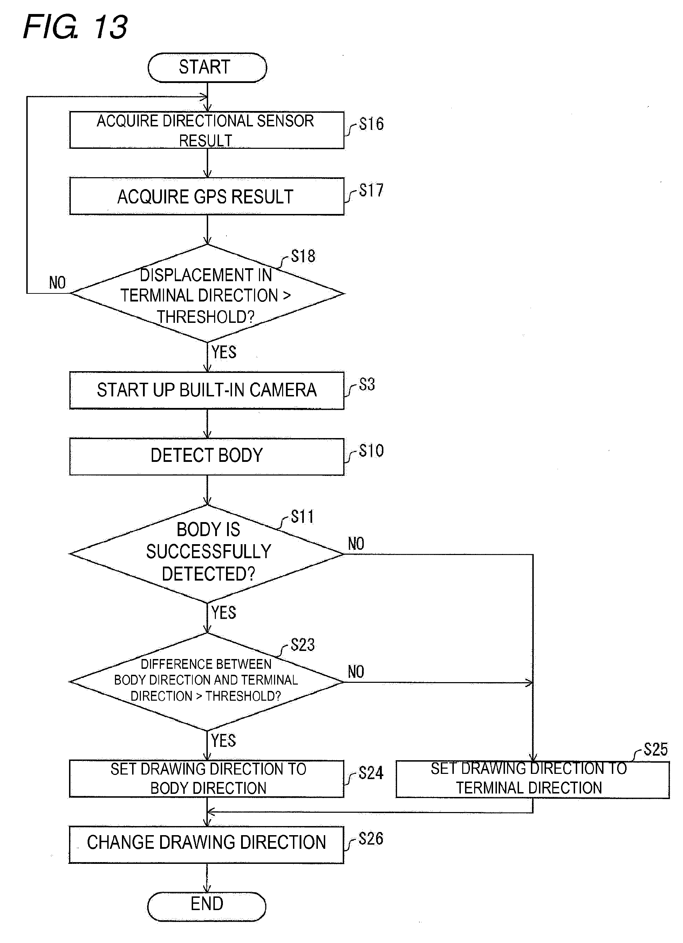

FIG. 13 is a flowchart illustrating an operation of the terminal of the modification. The same structural element as the above structural element is designated by the same reference numeral. The repetitive description of the same structural element is omitted.

The north-south direction D6 (see FIG. 9) is detected by the directional sensor indicating the north and south (Step S16). The GPS directional sensor 3b (see FIG. 10) detects the direction D5 (see FIG. 9) of the GPS satellite 16 (Step S17). The direction D2 of the display screen 2 of the terminal 1c is detected by the pitch angle θ + α, the yaw angle φ + β, and the roll angle δ + γ based on the north-south direction D6 and the direction D5 of the GPS satellite 16.

Whether the absolute value of α is greater than the threshold Th1.a of the pitch angle, whether the absolute value of β is greater than the threshold Th2.b of the yaw angle, or whether the absolute value of γ is greater than the threshold Th3.c of the roll angle is determined with respect to the pitch angle θ, the yaw angle φ, and the roll angle δ, which are the previous detection values (Step S18). When the absolute value of α is less than or equal to the threshold Th1.a of the pitch angle, when the absolute value of β is less than or equal to the threshold Th2.b of the yaw angle, or when the absolute value of γ is less than or equal to the threshold Th3.c of the roll angle (NO in Step S18), the flow returns to Step S16.

When the absolute value of α is greater than the threshold Th1.a of the pitch angle, when the absolute value of β is greater than the threshold Th2.b of the yaw angle, or when the absolute value of γ is greater than the threshold Th3.c of the roll angle (YES in Step S18), the camera 4 is started up (Step S3), and the body of the user who views the display screen 2 of the terminal 1c is imaged (Step S10). The body detection processor 14 determines whether the body of the user who views the display screen 2 of the terminal 1c is taken in the image imaged by the camera 4 (Step S11).

When the body of the user who views the display screen 2 of the terminal 1c is taken in the image imaged by the camera 4 (YES in Step S11), the body detection processor 14 determines the direction of the body of the user taken in the image imaged by the camera 4. The screen displaying part 12c compares the direction of the user's body determined by the body detection processor 14 with respect to the display screen 2 to the direction of the display screen 2 of the terminal 1c, which is detected by the GPS directional sensor 3b (Step S23).

For example, it is assumed that the direction D2 of the display screen 2 of the terminal 1c, which is detected by the GPS directional sensor 3b, is expressed by the pitch angle θ1, the yaw angle φ1, and the roll angle δ1. It is assumed that the direction of the body of the user who views the display screen 2 of the terminal 1c is expressed by the pitch angle θ2, the yaw angle φ2, and the roll angle δ2. When (θ1 - θ2) is greater than the pitch angle threshold Th1.aa, when (φ1 - φ2) is greater than the yaw angle threshold Th2.bb, or when (δ1 - δ2) is greater than the roll angle threshold Th3.cc (YES in Step S23), the screen displaying part 12c corrects the displaying direction of the display screen 2 based on the direction of the user's body with respect to the display screen 2 (Step S24).

When the face of the user who views the display screen 2 of the terminal 1c is not taken in the image imaged by the camera 4 (NO in Step S11) or when (θ1 - θ2) is less than or equal to the pitch angle threshold Th1.aa, when (φ1 - φ2) is less than or equal to the yaw angle threshold Th2.bb, or when (δ1 - δ2) is less than or equal to the roll angle threshold Th3.cc (NO in Step S23), the screen displaying part 12c sets the displaying direction to the direction D2 of the terminal 1c, which is detected by the GPS directional sensor 3b (Step S25).

When the displaying direction of the display screen 2 is corrected based on the direction of the user's body (Step S24), or when the displaying direction is set to the direction D2 of the terminal 1c, which is detected by the GPS directional sensor 3b (Step S25), the displaying direction of the display screen 2 of the terminal 1c is changed according to the setting result (Step S26). Then the processing is ended.

### (Effect of Second Embodiment)

According to the second embodiment, the camera images the user only when necessary according to the direction of the terminal, which is detected by the GPS directional sensor. Therefore, the display screen can be displayed in the direction corresponding to the direction of the user's body with less power consumption.

### (Third Embodiment)

### (Configurations of Terminals 1e and 1f)

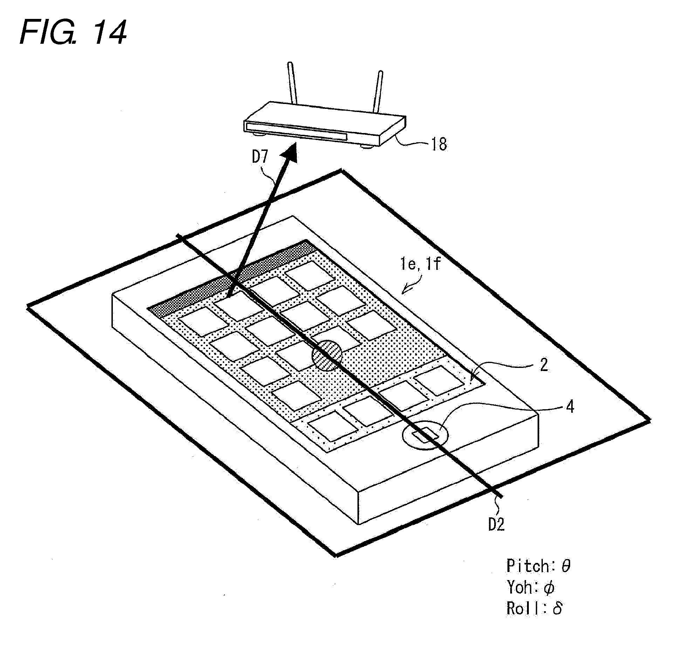

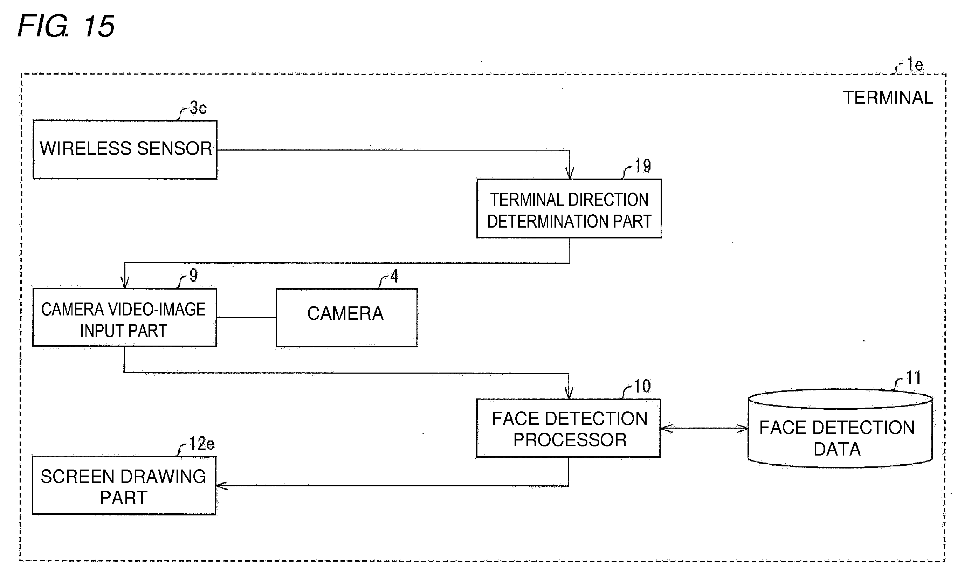

FIG. 14 is a view illustrating a method for detecting the directions D2 of terminals 1e and 1f according to a third embodiment with wireless sensors 3c (see FIG. 15) provided in the terminals 1e and 1f. FIG. 15 is a block diagram illustrating a configuration of the terminal 1e. The same structural element as the above structural element is designated by the same reference numeral. The repetitive description of the same structural element is omitted.

The terminal 1e differs from the terminal 1 in FIG. 2 in that the terminal 1e includes the wireless sensor 3c, a terminal direction determination part 19, and a screen displaying part 12e. The wireless sensor 3c detects a direction D7 of a transmitter 18 and supplies the direction D7 to the terminal direction determination part 19. The terminal direction determination part 19 determines the direction D2 of the terminal 1e based on the direction D7 of the transmitter 18, which is supplied from the wireless sensor 3c.

### (Operation of Terminal)

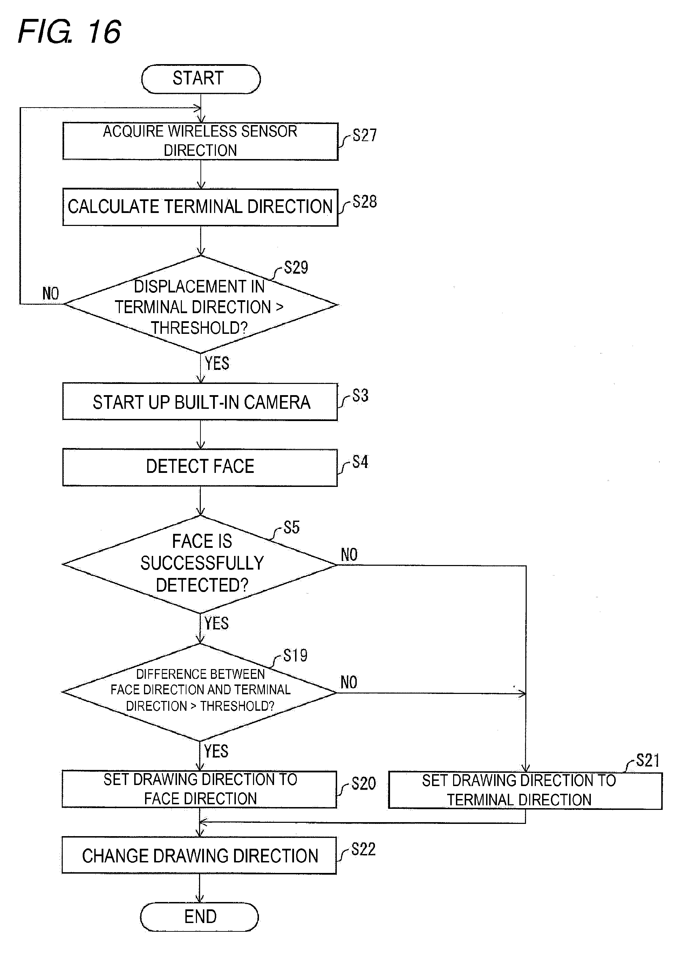

FIG. 16 is a flowchart illustrating an operation of the terminal 1e. The same structural element as the above structural element is designated by the same reference numeral. The repetitive description of the same structural element is omitted.

The direction D7 of the transmitter 18 is detected by the wireless sensor 3c (Step S27), and the direction D2 of the display screen 2 of the terminal 1e is detected by the pitch angle θ + α, the yaw angle φ + β, and the roll angle δ + γ based on the detected direction D7 (Step S28). Whether the absolute value of α is greater than the threshold Th1.a of the pitch angle, whether the absolute value of β is greater than the threshold Th2.b of the yaw angle, or whether the absolute value of γ is greater than the threshold Th3.c of the roll angle is determined with respect to the pitch angle θ, the yaw angle φ, and the roll angle δ, which are the previous detection values (Step S29). When the absolute value of α is less than or equal to the threshold Th1.a of the pitch angle, when the absolute value of β is less than or equal to the threshold Th2.b of the yaw angle, or when the absolute value of γ is less than or equal to the threshold Th3.c of the roll angle (NO in Step S29), the flow returns to Step S27.

When the absolute value of α is greater than the threshold Th1.a of the pitch angle, when the absolute value of β is greater than the threshold Th2.b of the yaw angle, or when the absolute value of γ is greater than the threshold Th3.c of the roll angle (YES in Step S29), the camera 4 is started up (Step S3), and the face of the user who views the display screen 2 of the terminal 1e is imaged (Step S4). The face detection processor 10 determines whether the face of the user who views the display screen 2 of the terminal 1e is taken in the image imaged by the camera 4 (Step S5).

When the face of the user who views the display screen 2 of the terminal 1e is taken in the image imaged by the camera 4 (YES in Step S5), the face detection processor 10 determines the direction of the face of the user taken in the image imaged by the camera 4. The screen displaying part 12e compares the direction of the user's face determined by the face detection processor 10 with respect to the display screen 2 to the direction of the display screen 2 of the terminal 1e, which is detected by the wireless sensor 3c (Step S19).

As described above, it is assumed that the direction D2 of the display screen 2 of the terminal 1e, which is detected by the wireless sensor 3c, is expressed by the pitch angle θ1, the yaw angle φ1, and the roll angle δ1. It is assumed that the direction of the user who views the display screen 2 of the terminal 1e is expressed by the pitch angle θ2, the yaw angle φ2, and the roll angle δ2. When (θ1 - θ2) is greater than the pitch angle threshold Th1.aa, when (φ1 - φ2) is greater than the yaw angle threshold Th2.bb, or when (δ1 - δ2) is greater than the roll angle threshold Th3.cc (YES in Step S19), the screen displaying part 12e corrects the displaying direction of the display screen 2 based on the direction of the user's face with respect to the display screen 2 (Step S20).

When the face of the user who views the display screen 2 of the terminal 1e is not taken in the image imaged by the camera 4 (NO in Step S5) or when (θ1 - θ2) is less than or equal to the pitch angle threshold Th1.aa, when (φ1 - φ2) is less than or equal to the yaw angle threshold Th2.bb, or when (δ1 - δ2) is less than or equal to the roll angle threshold Th3.cc (NO in Step S19), the screen displaying part 12e sets the displaying direction to the direction of the terminal 1e, which is detected by the wireless sensor 3e (Step S21).

When the displaying direction of the display screen 2 is corrected based on the direction of the user's face (Step S20), or when the displaying direction is set to the direction of the terminal 1e, which is detected by the wireless sensor 3e (Step S21), the displaying direction of the display screen 2 of the terminal 1e is changed according to the setting result (Step S22). Then the processing is ended.

### (Configuration of Modification)

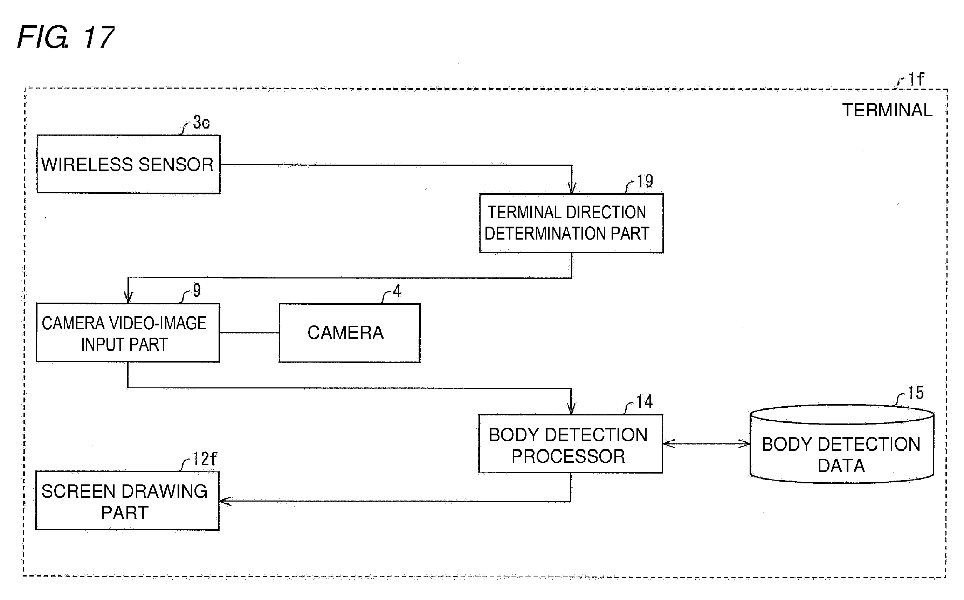

FIG. 17 is a block diagram illustrating a configuration of a terminal according to a modification of the third embodiment. The same structural element as the above structural element is designated by the same reference numeral. The repetitive description of the same structural element is omitted.

The terminal 1f differs from the terminal 1a in FIG. 7 in that the terminal 1f includes the wireless sensor 3c, the terminal direction determination part 19, and a screen displaying part 12f.

### (Operation of Modification)

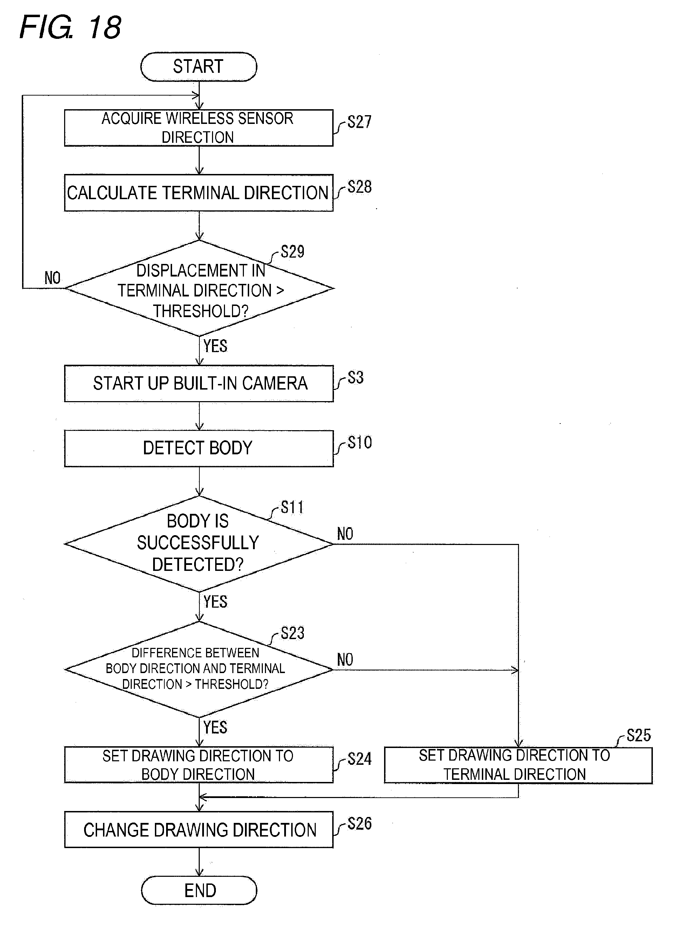

FIG. 18 is a flowchart illustrating an operation of the terminal 1f of the modification. The same structural element as the above structural element is designated by the same reference numeral. The repetitive description of the same structural element is omitted.

The direction D7 of the transmitter 18 is detected by the wireless sensor 3c (Step S27) and the direction D2 of the display screen 2 of the terminal 1f by the pitch angle θ + α, the yaw angle φ + β, and the roll angle δ + γ based on the detected direction D7 (Step S28). Whether the absolute value of α is greater than the threshold Th1.a of the pitch angle, whether the absolute value of β is greater than the threshold Th2.b of the yaw angle, or whether the absolute value of γ is greater than the threshold Th3.c of the roll angle is determined with respect to the pitch angle θ, the yaw angle φ, and the roll angle δ, which are the previous detection values (Step S29). When the absolute value of α is less than or equal to the threshold Th1.a of the pitch angle, when the absolute value of β is less than or equal to the threshold Th2.b of the yaw angle, or when the absolute value of γ is less than or equal to the threshold Th3.c of the roll angle (NO in Step S29), the flow returns to Step S27.

When the absolute value of α is greater than the threshold Th1.a of the pitch angle, when the absolute value of β is greater than the threshold Th2.b of the yaw angle, or when the absolute value of γ is greater than the threshold Th3.c of the roll angle (YES in Step S29), the camera 4 is started up (Step S3), and the body of the user who views the display screen 2 of the terminal 1f is imaged (Step S10). The body detection processor 14 determines whether the body of the user who views the display screen 2 of the terminal 1f is taken in the image imaged by the camera 4 (Step S11).

When the body of the user who views the display screen 2 of the terminal 1f is taken in the image imaged by the camera 4 (YES in Step S11), the body detection processor 14 determines the direction of the body of the user taken in the image imaged by the camera 4. The screen displaying part 12f compares the direction of the user's body determined by the body detection processor 14 with respect to the display screen 2 to the direction of the display screen 2 of the terminal 1f, which is detected by the wireless sensor 3c (Step S23).

When the difference between the direction of the user's body with respect to the display screen 2 and the direction of the display screen 2 of the terminal 1f is greater than a predetermined threshold (YES in Step S23), the screen displaying part 12f corrects the displaying direction of the display screen 2 based on the direction of the user's body with respect to the display screen 2 (Step S24).

When the body of the user who views the display screen 2 of the terminal 1f is not taken in the image imaged by the camera 4 (NO in Step S11), or when the difference between the direction of the user's body with respect to the display screen 2 and the direction of the display screen 2 of the terminal 1f is less than or equal to the threshold (NO in Step S23), the screen displaying part 12f sets the displaying direction to the direction of the terminal 1f, which is detected by the wireless sensor 3c (Step S25).

When the displaying direction of the display screen 2 is corrected based on the direction of the user's body (Step S24), or when the displaying direction is set to the direction of the terminal 1f, which is detected by the wireless sensor 3c (Step S25), the displaying direction of the display screen 2 of the terminal 1f is changed according to the setting result (Step S26). Then the processing is ended.

### (Effect of Third Embodiment)

According to the third embodiment, the camera images the user only when necessary according to the direction of the terminal, which is detected by the wireless sensor. Therefore, the display screen can be displayed in the direction corresponding to the direction of the user's body with less power consumption.

### (Fourth Embodiment)

In a terminal according to a fourth embodiment, the user is imaged when the determination that the display screen is horizontally oriented is made based on the terminal direction detected by the gyrosensor, and the set displaying direction is corrected based on the direction of the user's body, which is imaged by the camera when the determination that the display screen is horizontally oriented is made.

### (Configuration of Terminal 1g)

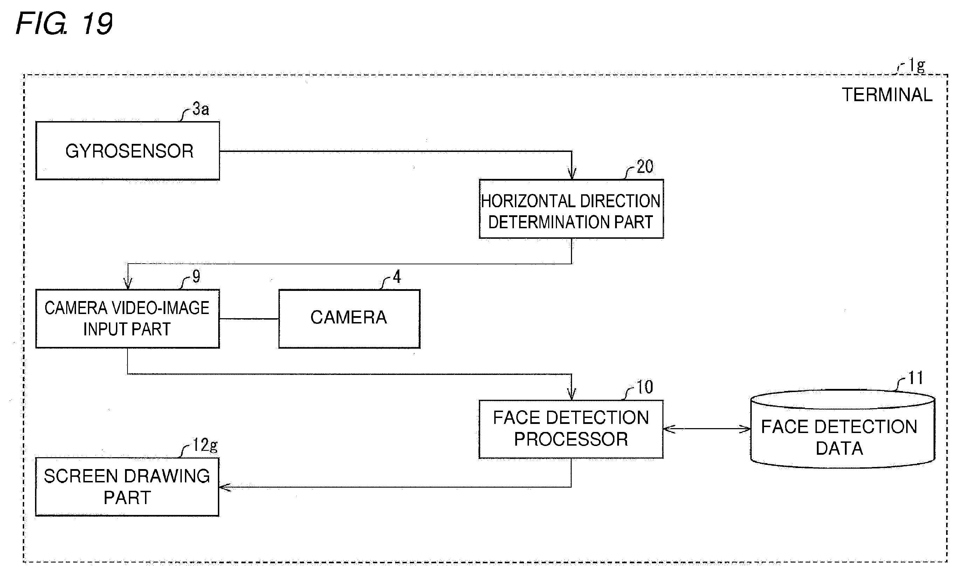

FIG. 19 is a block diagram illustrating a configuration of a terminal 1g according to a fourth embodiment. The same structural element as the above structural element is designated by the same reference numeral. The repetitive description of the same structural element is omitted.

The terminal 1g differs from the terminal 1 in FIG. 2 in that the terminal 1g includes a horizontal direction determination part 20 and a screen displaying part 12g. The horizontal direction determination part 20 determines whether the direction of the display screen 2 of the terminal 1g, which is determined based on the gravitation direction detected by the gyrosensor, is the horizontal direction.

### (Operation of Terminal 1g)

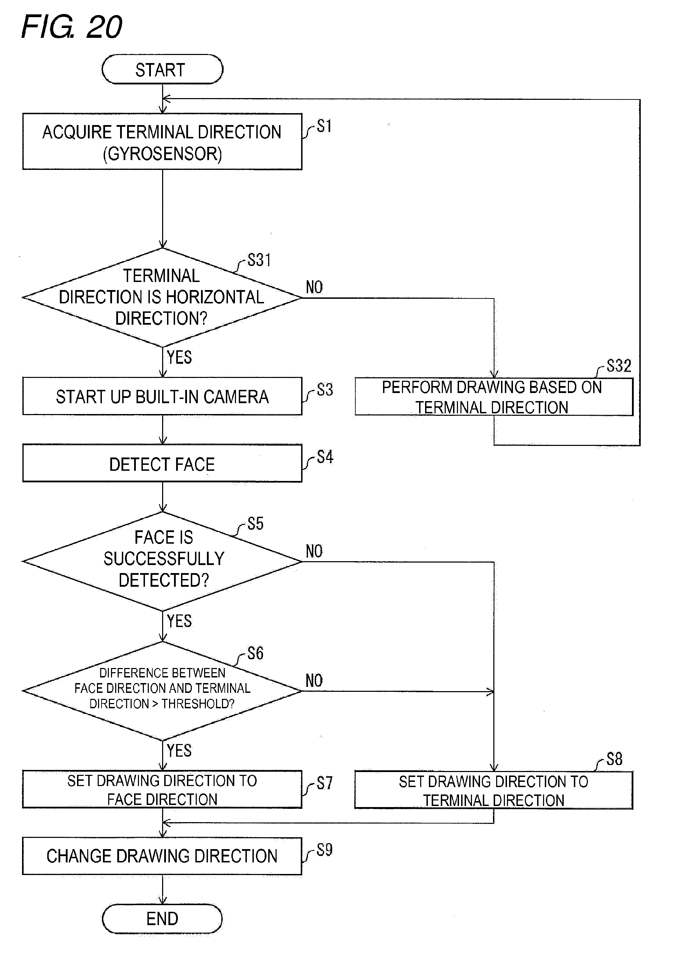

FIG. 20 is a flowchart illustrating an operation of the terminal 1g. The same structural element as the above structural element is designated by the same reference numeral. The repetitive description of the same structural element is omitted.

The gravitation direction is detected by the gyrosensor 3a, and the direction of the display screen 2 of the terminal 1g is acquired based on the detected gravitation direction (Step S1). The horizontal direction determination part 20 determines whether the direction of the terminal 1g is the horizontal direction (Step S31).

When the direction of the terminal 1g is not the horizontal direction (NO in Step S31), the display screen 2 is displayed based on the acquired direction of the display screen 2 of the terminal 1g (Step S32). Then the flow returns to Step S1.

When the direction of the terminal 1g is the horizontal direction (YES in Step S31), the camera 4 is started up (Step S3), and the user who views the display screen 2 of the terminal 1g in a horizontal orientation is imaged (Step S4). The face detection processor 10 determines whether the face of the user who views the display screen 2 of the terminal 1g in a horizontal orientation is taken in the image imaged by the camera 4 (Step S5).

When the face of the user who views the display screen 2 of the terminal 1g is taken in the image imaged by the camera 4 (YES in Step S5), the face detection processor 10 determines the direction of the face of the user taken in the image imaged by the camera 4. The screen displaying part 12g compares the direction of the user's face determined by the face detection processor 10 with respect to the display screen 2 to the displaying direction based on the direction of the display screen 2 of the terminal 1g, which is detected by the gyrosensor 3a (Step S6).

When the difference between the direction of the user's face determined by the face detection processor 10 with respect to the display screen 2 and the displaying direction based on the direction of the display screen 2 of the terminal 1g detected by the gyrosensor 3a is greater than a predetermined threshold (YES in Step S6), the screen displaying part 12g corrects the displaying direction of the display screen 2 based on the direction of the user's face with respect to the display screen 2 (Step S7).

When the face of the user who views the display screen 2 of the terminal 1g is not taken in the image imaged by the camera 4 (NO in Step S5) or when the difference between the direction of the user's face determined by the face detection processor 10 with respect to the display screen 2 and the displaying direction based on the direction of the terminal 1g is less than or equal to the predetermined threshold (NO in Step S6), the screen displaying part 12g sets the displaying direction to the direction of the terminal 1g, which is detected by the gyrosensor 3a (Step S8).

When the displaying direction of the display screen 2 is corrected based on the direction of the user's face (Step S7), or when the displaying direction is set to the direction of the terminal 1g, which is detected by the gyrosensor 3a (Step S8), the displaying direction of the display screen 2 of the terminal 1g is changed according to the setting result (Step S9). Then the processing is ended.

### (Effect of Fourth Embodiment)

According to the fourth embodiment, the user who views the display screen is imaged when the display screen of the terminal is horizontally oriented. Therefore, the display screen can be displayed in the direction corresponding to the direction of the user with less power consumption.

### (Program and Recording Medium)

The parts, such as the face detection processor, the screen displaying part, and the gravitation-direction determination part, which are included in the terminals of the embodiments may be configured by a hardware logic. Using a CPU (Central Processing Unit), the parts may be constructed by software as described below.

That is, the face detection processor and the like include the CPU (Central Processing Unit) that executes a command of a control program implementing each function, a ROM (Read Only Memory) in which the program is stored, a RAM (Random Access Memory) in which the program is expanded in an executable format, and a storage device (a recording medium), such as a memory, in which the program and various pieces of data are stored. According to the configuration, the object of the present invention can be achieved by a given recording medium.

Program codes (an executable format program, an intermediate code program, a source program) of the programs for the face detection processor and the like, which are the software implementing the functions, may be stored in the recording medium while being readable by a computer. The recording medium is supplied to the face detection processor. Therefore, the face detection processor (or the CPU or an MPU) that is the computer may read and execute the supplied program codes recorded in the recording medium.

The recording medium supplying the program codes to the face detection processor is not limited to a specific structure or a specific kind. Examples of the recording medium include tape systems such as magnetic tape and cassette tape, disk systems including magnetic disks such as floppy disk (registered trademark) and a hard disk and optical disks such as a CD-ROM, an MO an MD, a DVD, and a CD-R, card systems such as an IC card (including a memory card) and an optical card, and semiconductor memory systems such as a mask ROM, an EPROM, an EEPROM and a flash ROM.

The object of the present invention can also be achieved even if the face detection processor is configured to be able to be connected to a communication network. In this case, the program codes are supplied to the face detection processor through the communication network. The communication network is not limited to the specific structure or the specific kind, but any communication network may be used as long as the program codes can be supplied to the face detection processor. Examples of the communication network include the Internet, an intranet, an extranet, a LAN, an ISDN, a VAN, a CATV communication network, a virtual private network, a telephone line network, a mobile communication network, and a satellite communication network.

A transmission medium constituting the communication network is not limited to the specific structure or the specific kind, but any transmission medium constituting the communication network may be used as long as the program codes can be transmitted. Examples of the transmission medium include wired lines such as IEEE 1394, a USB, a power-line carrier, a cable TV line, a telephone line, and an ADSL line and wireless lines such as infrared ray such as IrDA and a remote controller, Blue-tooth (registered trademark), 802.11 wireless, HDR, a mobile telephone network, a satellite line, and a terrestrial digital network. The invention can be implemented in the form of a computer data signal embedded in a carrier wave in which the program code is embodied by electronic transmission.

The invention is not limited to the first to fifth embodiments, but various changes can be made without departing from the scope of the invention. An embodiment obtained by appropriately combining technical means disclosed in the different embodiments is also included in the technical range of the invention.

The present invention can be applied to the terminal that can display the display screen in a direction corresponding to the direction of the user's body, the display direction correcting method for a display screen, and the computer-readable recording medium.

## Claims

1. A terminal provided with a display screen, comprising:
a terminal direction detector that detects a direction of the terminal;
an imaging part that is provided in order to image a user who views the display screen;
a user direction detector that detects a direction of the user imaged by the imaging part; and
a screen display direction deciding part that decides a display direction of the display screen based on the terminal direction detected by the terminal direction detector and the user direction detected by the user direction detector.

2. The terminal according to claim 1, wherein the screen display direction deciding part decides the display direction of the display screen based on a difference between the terminal direction detected by the terminal direction detector and the user direction detected by the user direction detector.

3. The terminal according to claim 2, wherein the screen display direction deciding part sets the display direction of the display screen to the direction of the user when the direction of the terminal differs from the direction of the user.

4. The terminal according to claim 1, wherein the imaging part images the user according to a change in terminal direction detected by the terminal direction detector.

5. The terminal according to claim 4, wherein the imaging part images the user when the change in terminal direction is greater than a predetermined threshold.

6. The terminal according to claim 1, wherein the imaging part images the user when a determination that the display screen is oriented toward a horizontal direction is made by the terminal direction detected by the terminal direction detector.

7. The terminal according to claim 1, wherein the user direction detector detects the user direction based on a direction of a body of the user imaged by the imaging part.

8. The terminal according to claim 1, wherein the user direction detector detects the user direction based on a direction of a face of the user imaged by the imaging part.

9. The terminal according to claim 1, wherein the terminal direction detector includes a gyrosensor that detects the terminal direction based on a gravitation direction.

10. The terminal according to claim 1, wherein the terminal direction detector includes a GPS directional sensor that detects the terminal direction based on a direction of a GPS satellite and a direction of a directional sensor.

11. The terminal according to claim 1, wherein the terminal direction detector includes a wireless sensor that detects the terminal direction based on a direction of a transmitter.

12. A display direction correcting method for a display screen comprising the steps of:
detecting a direction of a terminal provided with a display screen;
imaging a user who views the display screen;
detecting a direction of the user imaged in the imaging step; and
deciding a display direction of the display screen based on the terminal direction detected in the terminal direction detecting step and the user direction detected in the user direction detecting step.

13. A program causing a computer to perform the steps of:
detecting a direction of a terminal provided with a display screen;
imaging a user who views the display screen;
detecting a direction of the user imaged in the imaging step; and
deciding a display direction of the display screen based on the terminal direction detected in the terminal direction detecting step and the user direction detected in the user direction detecting step.

14. A computer-readable recording medium in which a program is recorded, wherein the program causes a computer to perform the steps of:
detecting a direction of a terminal provided with a display screen;
imaging a user who views the display screen;
detecting a direction of the user imaged in the imaging step; and
deciding a display direction of the display screen based on the terminal direction detected in the terminal direction detecting step and the user direction detected in the user direction detecting step.
